# NEUE EUROPÄISCHE PATENTSCHRIFT

(11) **EP 2 581 577 B2**
(45) Veröffentlichungstag und Bekanntmachung des Hinweises auf die Entscheidung über den Einspruch: **24.03.2021**
(45) Hinweis auf die Patenterteilung: 25.03.2015
(21) Anmeldenummer: 12178935.8
(22) Anmeldetag: 02.08.2012
(51) Int. Cl.: F01N 3/28

(54) **Verfahren zum Einschieben eines Monolithen mit Lagerungsmatte in ein Gehäuse**
Method for assembling a monolith with a mat in a housing
Procédé de d'assemblage d'un monolithe avec un mat dans un boîtier

(30) Priorität: 11.10.2011 DE 102011115509
(43) Veröffentlichungstag der Anmeldung: 17.04.2013
(73) Patentinhaber: Benteler Automobiltechnik GmbH, 33102 Paderborn (DE)
(72) Erfinder: Ackerschott, Dennis, 33106 Paderbron (DE); Ewers, Roland, 33102 Paderbron (DE); Merschkötter, Stefan, 33098 Paderbron (DE)
(74) Vertreter: Ksoll, Peter

(56) Entgegenhaltungen:
- WO-A1-02/095198
- DE-A1-102006 049 236
- DE-A1-102007 021 493
- US-B1- 6 405 437

## Beschreibung

Die Erfindung betrifft ein Verfahren zum Einhausen eines Monolithen mit Lagerungsmatte in ein Gehäuse, wobei der Monolith mit der Lagerungsmatte umwickelt und in das Gehäuse gestopft wird.

Abgaskatalysatoren und Dieselpartikelfilter umfassen typischerweise ein Gehäuse, in dem ein Katalysator oder Dieselpartikelfilter in Form eines Monolithen angeordnet ist. Der Monolith besteht in der Regel aus einem Filterkörper, beispielsweise aus einem Keramiksubstrat. Um den Monolithen herum ist eine Lagerungsmatte angeordnet. Die Funktion der Lagerungsmatte ist einer Feder vergleichbar. Die Lagerungsmatte dient dazu, den Monolithen bei verschiedenen Temperaturen und bei unterschiedlichem Lastbetrieb an Ort und Stelle im Gehäuse zu halten. Bei kalten Temperaturen ist die Lagerungsmatte, wenn es sich um eine Quellmatte handelt, noch nicht aufgequollen. Trotzdem muss die Lagerungsmatte den Monolithen sicher im Gehäuse halten. Bei warmen Temperaturen quillt die Lagerungsmatte in der Regel stärker auf als sich das Gehäuse aufgrund der Wärme ausdehnt, ohne dass dabei die Kräfte, die auf den Monolithen wirken, zur Beschädigung desselben führen dürfen. Hinzu kommt, dass Monolith, Lagerungsmatte und Gehäuse alle Toleranzen in Bezug auf Größe, Umfang und/oder Dicke aufweisen. Das hier beanspruchte Stopfverfahren bedeutet, dass ein mit einer Lagerungsmatte umwickelter Monolith in ein vorgefertigtes Gehäuse eingeschoben oder eingepresst wird, ohne dass das Gehäuse plastisch deformiert wird. Dazu steht das Gehäuse in der Regel auf dem Boden oder einer Platte und von oben wird der mit der Lagerungsmatte umwickelte Monolith eingeschoben. Der Gehäusedurchmesser ist im Rahmen der Toleranzabweichungen vorgegeben, ebenso der Durchmesser des Monolithen. Einzig die Lagerungsmatte kann durch ihre Federwirkung Abweichungen innerhalb der Toleranzen ausgleichen, dies jedoch nur bis zu einem gewissen Grad. Wird die Lagerungsmatte zu sehr zusammengepresst, also überpresst, nimmt sie dauerhaft Schaden. Idealerweise würde die Lagerungsmatte nur bis zu ihrer optimalen Federwirkung zusammengepresst, so dass sie gerade genug Kräfte aufbringen muss, um den Monolithen im Gehäuse zu halten. Beim Stopfen wird die Lagerungsmatte jedoch häufig wesentlich höheren Pressungen unterworfen. Könnten hier geringere Presskräfte aufgebracht werden, würde das die Qualität und Dauerhaltbarkeit des Katalysators erhöhen, gegebenenfalls könnte durch Verwenden einer dünneren Lagerungsmatte Kosten gespart werden. Ein weiteres Problem beim Stopfen in ein vorgefertigtes Gehäuse besteht darin, dass selbst Gehäuse mit kreisrunden Querschnitten nicht über einen idealen kreisrunden Querschnitt verfügen. Es gibt grundsätzlich im Rahmen der Toleranzabweichungen auch Abweichungen vom idealen Querschnitt. Verfügt das vorgefertigte Gehäuse über einen unrunden Querschnitt, verschärft sich das Problem noch. Beim Positionieren von Gehäuse und mit der Lagerungsmatte umwickelten Monolithen zueinander für den Stopfvorgang kann eine Verdrehung von Gehäuse und/oder Monolith zueinander nicht ausgeschlossen werden. Selbst eine geringfügige Verdrehung von 1 bis 2°, kann dazu führen, dass die Lagerungsmatte an einer Stelle des Querschnitts beim Stopfen stirnseitig auf die Gehäusewand trifft und so geschert wird. Beim Stopfen des mit der Lagerungsmatte umwickelten Monolithen in das Gehäuse muss daher ein Überpressen oder Abscheren der Lagerungsmatte vermieden werden, weil andernfalls die Lebensdauer des Katalysators oder Dieselpartikelfilters reduziert wird. Andererseits darf das Gehäuse auch nicht so groß sein, dass der Monolith Spiel hat.

Aus dem Stand der Technik sind verschiedene andere Verfahren zum Einhausen eines mit einer Lagerungsmatte umwickelten Monolithen in ein Gehäuse bekannt.

Die DE 198 17 787 A1 offenbart ein Verfahren und die dazu gehörige Vorrichtung zum Herstellen eines metallischen Wabenkörpers. Hierbei wird eine wenigstens teilweise strukturierte Blechlage zu einer Matrix gewickelt und durch eine Fremderregung in Schwingung versetzt. Während oder nach dieser Fremderregung wird die Matrix in ein Metallrohr eingeführt. Diese fremderregten Schwingungen können auch periodisch auftreten und können durch kinematische Erregung oder äußere Krafteinwirkung erzeugt werden. Die Matrix kann während oder nach diesem Schwingungsvorgang mittels einer Führungseinheit in einem Mantelrohr angeordnet werden.

So offenbart die EP 0 681 095 B1 ein Montageverfahren für Abgaskatalysatoren in Rohrbauweise mit den Verfahrensschritten: Bereitstellen von im Wesentlichen zylindrischen Katalysatorkörpern, Bereitstellen von Rohrabschnitten, Umwickeln der Katalysatorkörper mit wenigstens einer Lage einer Lagerungsmatte, Einschieben eines aus Katalysatorkörper und Lagerungsmatte bestehenden Pakets in einen Rohrabschnitt und Messung der Sollwertabweichung der Querschnittsfläche eines Katalysatorkörpers und Kompensierung der Sollwertabweichung durch eine Anpassung in Form einer Vergrößerung oder Verkleinerung des Umfangs bzw. der Innenquerschnittsfläche des diesem Katalysator zugeordneten Rohrabschnitts in Abhängigkeit von der Größe und dem Vorzeichen der Sollwertabweichung. Gemäß der Figur 10 wird das Monolithen-Matten-Paket durch einen konischen Trichter in das Gehäuse gestopft. Gemäß der Figuren 12 und 13 wird das Monolithen-Matten-Paket von zwei Klemmbacken klemmend gehalten. Dadurch ist die Lagerungsmatte praktisch an jeder Stelle mit gleichmäßigem Druck an die Umfangsfläche des Monolithen gepresst. Gemäß der Figuren 15 und 16 können auch nicht nur im Querschnitt kreisrunde, sondern auch etwa an die Bodengruppe eines Fahrzeugs angepasste Formen gestopft werden. Gleiches gilt für leicht oval verformte Monolithen. Bei allen Ausführungsbeispielen wird das Gehäuse anhand einer plastischen Deformation angepasst. Auch die dazu vorgenommen Messverfahren sind aufwändig.

Die EP 0 703 354 B1 offenbart ein Verfahren zur Herstellung von Katalysatoren durch Einschieben eines Monolithen und umgebendem Lagermantel in vorgefertigte Rohre, welche im Querschnitt im Wesentlichen das Monolithenprofil plus Aufmaß für den Lagermantel aufweisen, wobei die Anpassung der Rohrmaße auf einen konstanten Spalt zum Monolith durch Aufkalibrieren der im Querschnitt kleiner vorgefertigten Rohre erfolgt und zur Anpassung der Rohrmaße die Monolithmaße aus der bei der Monolithherstellung zur Qualitätssicherung vorgenommenen Vermessung übernommen werden. Auch hier erfolgt eine aufwändige plastische Deformation des Gehäuses.

Die EP 1 445 443 B1 zeigt ein Verfahren und eine Vorrichtung zur Herstellung eines Abgaskatalysators oder Diesel- Partikelfilters. Dabei wird ein Filterkörper bereitgestellt und die Abmessung des Filterkörpers ermittelt. Der Filterkörper wird mit einer Montagematte versehen, die um ihn herum gelegt wird. Aufgrund der ermittelten Abmessung des Filterkörpers wird die Länge festgelegt, auf die ein Gehäusematerial zu einem Stück zugeschnitten wird. Anschließend wird das Gehäuse geformt und dann entweder die Packung aus Filterkörper und Montagematte in das Gehäuse eingebracht und dann das Gehäuse verbunden, oder das Gehäuse wird zuerst verbunden und dann die Packung aus Filterkörper und Montagematte in das Gehäuse eingebracht. Hier wird jedes Gehäuse individuell für einen bestimmten Filterkörper hergestellt. Dies ist ebenfalls aufwändig.

Die DE 10 2006 049 236 A1 beschreibt ein Werkzeug zum Herstellen von abgasführenden Vorrichtungen wie Katalysatoren oder Dieselpartikelfiltern, wobei in einem Gehäuse mit Mantel ein Einleger samt einer ihn umgebenden Lagerungsmatte klemmend gehalten wird. Dabei soll das Werkzeug universell für mehrere Canning-Verfahren (Einhausen) verwendbar sein. Das erfindungsgemäße Werkzeug umfasst einen Arbeitsraum zur Aufnahme des Einlegers oder einer Einheit aus Einleger und ihn umgebenden Mantel, mehrere ein- und auswärts in Richtung in bzw. aus dem Arbeitsraum beweglichen Druckbacken zum Verformen des Einlegers und/ oder des Mantels und Klemmen des Einlegers im Mantel. Wenigstens ein, in Längsrichtung des Arbeitsraumes gesehen, den Arbeitsraum umgebendes, zur Bewegung wenigstens einiger der Druckbacken drehbares Antriebsteil ist vorgesehen. Dieses ist mit den zugeordneten Druckbacken gekoppelt und wandelt die Drehbewegung in eine Einwärtsbewegung der Druckbacken um. Das Werkzeug wird zum Shrinken, Wickeln oder zum Einhausen in ein anschließend zusammengeschweißtes Gehäuse verwendet. Alle diese Verfahren deformieren das Gehäuse plastisch. Außerdem können mit dem Werkzeug Druckmessungen am Einleger vorgenommen werden.

Beim für die vorliegende Erfindung relevanten Stopfen wird der Monolith mit Lagerungsmatte durch einen Stopftrichter in das Gehäuse eingeführt. Dabei sollte die Kontur des Stopftrichters an seinem kleinsten Durchmesser möglichst der Gehäusekontur entsprechen oder nur geringfügig kleiner sein. Ist die Kontur am kleinsten Durchmesser des Stopftrichters deutlich kleiner als das Gehäuse, kann die den Monolithen umgebende Lagerungsmatte beim Durchlaufen des Stopftrichters überpresst werden. Dies gilt insbesondere für Lagerungsmatten mit einem hohen Flächengewicht, die die Toleranz ausschöpfen. Eine Überpressung schädigt wie weiter oben dargestellt die Lagerungsmatte und führt zur Herabsetzung der Lebensdauer des gesamten Katalysators oder Dieselpartikelfilters. Ist das Gehäuse kleiner als die Kontur am kleinsten Durchmesser des Stopftrichters, führt dies zu einer übermäßigen Scherung der Lagerungsmatte oder der mit der Lagerungsmatte umwickelte Monolith kann nicht fehlerfrei in das Gehäuse eingeschoben werden. Bei einem unrunden Querschnitt führt eine Verdrehung des Gehäuses zudem zu einem ähnlichen Fehler wie ein zu kleines Gehäuse. Hinzu kommt, dass nicht jedes Gehäuse genau auf Maß gefertigt ist, sondern fertigungsbedingte Toleranzen auftreten, die mit einem positiven oder negativen Vorzeichen vom Sollwert abweichen. Die Kontur am kleinsten Durchmesser des Stopftrichters ist folglich auf die kleinste Gehäusekontur innerhalb der Toleranzbreite auszulegen.

Es ist daher Aufgabe der vorliegenden Erfindung, ein Verfahren zum Stopfen eines Monolithen mit Lagerungsmatte in ein vorgegebenes Gehäuse aufzuzeigen, bei dem die Kontur an einem kleinsten Durchmesser eines Stopftrichters möglichst gleich oder nur wenig kleiner der innerhalb der zulässigen Toleranzen kleinsten Gehäusekontur (Minimalkontur) ist und der mit der Lagerungsmatte umwickelte Monolith möglichst fehlerfrei in das Gehäuse eingeschoben werden kann.

Diese Aufgabe löst die Erfindung mit den Merkmalen des Anspruchs 1. Demnach wird ein Verfahren zum Einhausen eines Monolithen mit Lagerungsmatte in ein Gehäuse aufgezeigt, wobei der Monolith mit der Lagerungsmatte umwickelt und in das Gehäuse gestopft wird. Erfindungsgemäß wird das Gehäuse während des Stopfens an mehreren Stellen geklemmt, wobei durch die Klemmung mittels einer elastischen Verformung eine Gehäusetoleranz und/oder eine Gehäuseverdrehung ausgeglichen werden. Eine plastische Verformung findet nicht statt, stattdessen wird nur die Elastizität des Gehäusematerials ausgenutzt, um den Gehäuseeingang der Stopftrichterkontur anzupassen. Erfindungsgemäß wird nur der Eingangsbereich des Gehäuses geklemmt, der unmittelbar vor dem Stopftrichter liegt. Ist der Monolith mit der ihn umgebenden Lagermatte erst mal in das Gehäuse eingeführt, tritt beim weiteren Einschieben innerhalb des Gehäuses keine Scherung mehr auf. Stattdessen kann sich das Gehäuse elastisch an den Monolithen mit Lagerungsmatte anpassen.

Die Problematik besteht nur beim Einlauf des Monolithen mit Lagerungsmatte in das Gehäuse. Ein im Querschnitt rundes Gehäuse wird dabei zur Kompensation von fertigungsbedingten Querschnittsabweichungen mittels mindestens eines Spannsegmentes radial auf Nominalkontur geklemmt. Erfindungsgemäß kann jede Kontur durch die elastische Klemmung im Eingangsbereich des Gehäuses auf die Kontur des Stopftrichters angepasst werden, immer vorausgesetzt, dass die Kontur am kleinsten Durchmesser des Stopftrichters auf die Minimalkontur, also auf die kleinste Gehäusekontur innerhalb der Toleranzbreite, ausgelegt ist.

Dabei ist die Klemmung danach auszulegen, an welchen Druckpunkten die Gehäusekontur elastisch geklemmt werden muss, damit sich die Kontur in Maximal- und Minimalbereichen wieder auf das Sollmaß zurückbewegt. Dies wird bei einem im Querschnitt unrunden Gehäuse erfindungsgemäß erreicht, indem das Gehäuse im Bereich eines kleineren Radius mittels eines Spannsegments auf Minimalkontur geklemmt wird, während das Gehäuse im Bereich eines größeren Radius expandieren kann. Die Bereiche kleinerer und größerer Radien sind dabei relativ und auf das jeweilige Gehäuse bezogen.

Zunächst ist festzuhalten, dass bei den gängigen Monolithenformen, die gestopft werden, grundsätzlich Radien im Gehäuse vorliegen und Winkel mit scharfen Kanten vermieden werden, da scharfe Kanten Fehler beim Stopfvorgang geradezu provozieren. Die Gehäuse neigen dazu, in den Bereichen mit den verhältnismäßig größten Radien zu verflachen. Dem kann durch Druck auf die verhältnismäßig kleinsten Radien entgegengewirkt werden. Entweder können die großen Radien durch den Druck auf die kleinsten Radien frei expandieren oder die Expansion wird im Bereich eines großen Radius durch ein Spannsegment begrenzt, das auf eine Nominalkontur, also genau auf Maß, an dieser Stelle ausgelegt wird. Das führt dazu, dass das Gehäusematerial elastisch in Richtung mittlerer Radien ausweicht. Im Bereich mittlerer Radien können ebenfalls Spannsegmente angebracht sein. Diese Spannsegmente werden dann mindestens auf die Maximalkontur des Gehäuses, also auf eine Gehäusekontur mit der größten Toleranzabweichung, ausgelegt. Falls notwendig, unterstützen sie die elastische Gehäusedeformation in Richtung Idealkontur. Erfindungsgemäß kann es dabei in einer bevorzugten Ausführungsform genügen, die Spannsegmente im Bereich des mittleren und/ oder des großen Radius nur als Gegenhalter oder Anschlag auszubilden.

Besonders einfach kann ein ovaler Querschnitt erfindungsgemäß durch Klemmung angepasst werden. Hier genügt ein Klemmen mittels vier Spannsegmenten, wobei zwei erste Spannsegmente an einem kleinsten Radius des idealen, also des Normquerschnitts auf die Minimalkontur des Gehäuses ausgelegt werden. Zwei zweite Spannsegmente werden an einem großen Radius des Normquerschnitts auf eine Nominalkontur des Gehäuses ausgelegt. Der Stopftrichter entspricht an seinem kleinsten Durchmesser dem kleinsten Gehäuse innerhalb der Toleranzbreite oder ist zwecks verbesserten Einlaufs nur geringfügig kleiner.

Durch die Auslegung der ersten Spannsegmente auf eine minimale Umfangskontur wird sichergestellt, dass jedes Gehäuse auch bei einer leichten Verdrehung durch elastische Deformation an diesen Stellen auf die minimal notwendige Breite zusammengedrückt wird, wodurch sich die Gehäusekontur an Stellen, an denen keine Klemmung stattfindet, ausdehnt. Die Klemmung durch die zweiten Spannsegmente an dem großen Radius des Normquerschnitts auf Nominalkontur unterstützt dabei ein elastisches Verdrängen des Gehäusematerials in die Bereiche mit mittleren Radien. Insbesondere bei ovalen Querschnitten genügt eine Klemmung an diesen vier Gehäusestellen. Ein ovaler Querschnitt kann daher einfach durch eine an sich bekannte Keilpresse aus dem Stand der Technik geklemmt werden.

Die erfindungsgemäße Klemmung kann besonders bevorzugt über eine an sich bekannte Radialpresse aus dem Stand der Technik vorgenommen werden. Erfindungsgemäß werden die Spannsegmente dabei über Langlöcher verfahren, so dass die Spannsegmente bei einer Drehbewegung der Radialpresse sowohl einwärts als auch auswärts verfahren werden können. Dabei verläuft erfindungsgemäß in einer besonderen Ausführungsform eine Steigung im Langloch am Pressenanschlag gegen Null. Dadurch wird die Rückstellkraft auf einen Zylinder der Presse, der die Drehbewegung ausführt, am Pressenanschlag minimiert. Da hier erfindungsgemäß sowohl die Kontur elastisch möglichst auf Nominalmaß geklemmt werden soll, als auch eine Gehäuseverdrehung ausgeglichen werden soll, wird ein Gegenhalter, der zum Gegenhalten des Gehäuses während des Stopfvorgangs eingesetzt wird, drehbeweglich gelagert. Auf diese Weise kann der Gegenhalter eine ausgleichende Drehbewegung des Gehäuses nachvollziehen.

Nachfolgend ist die Erfindung anhand der Figuren genauer beschrieben. Dabei zeigen:

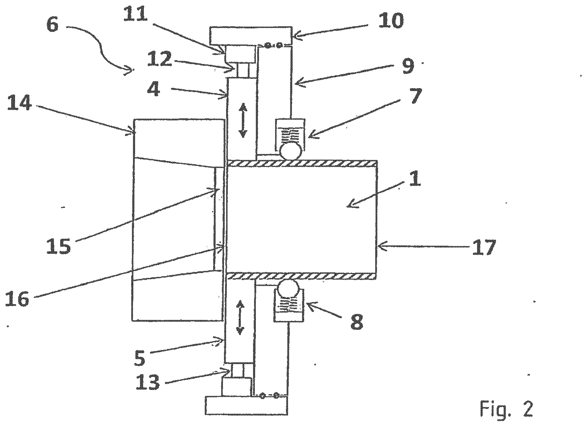

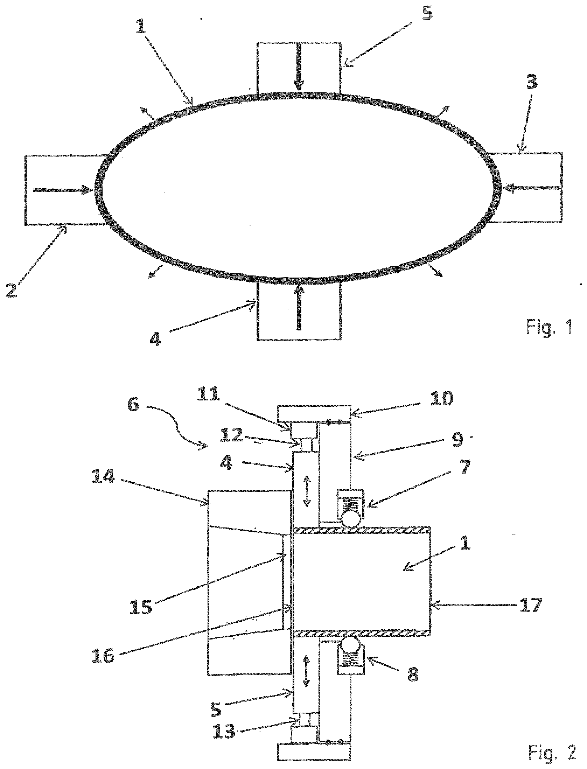

- Figur 1: ein ovales Gehäuse mit vier Spannsegmenten;
- Figur 2: eine schematische Vorrichtung zum Ausüben des erfindungsgemäßen Verfahrens im Querschnitt;

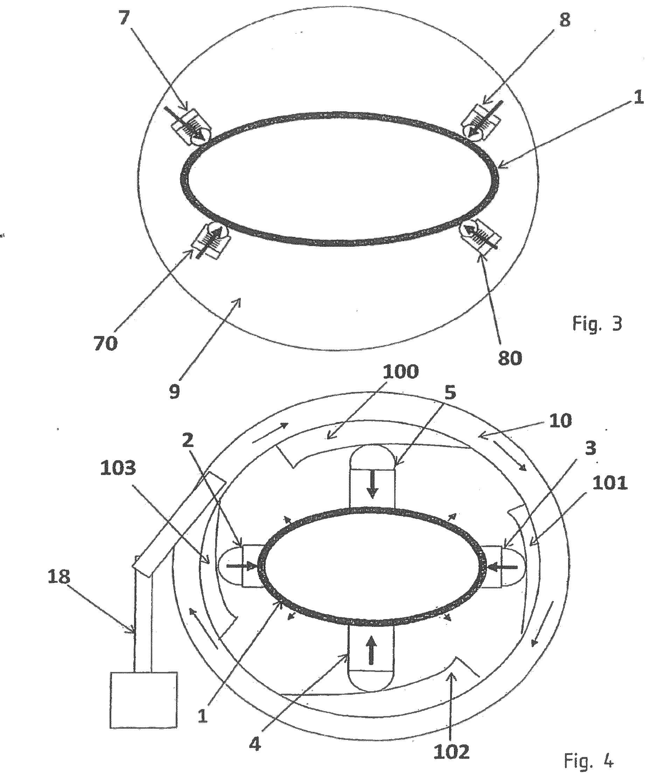

- Figur 3: eine schematische Darstellung des Einlegens des Gehäuses;
- Figur 4: eine schematische Darstellung des Klemmens des Gehäuses;

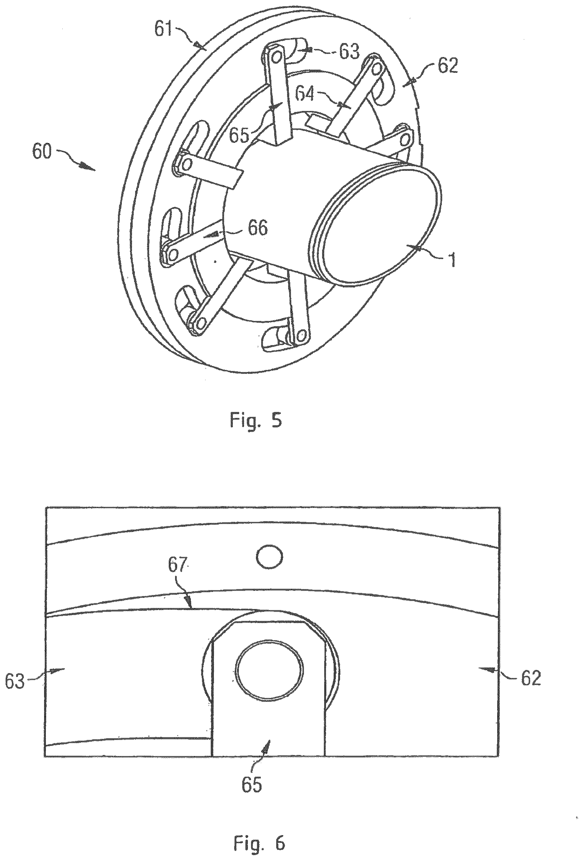

- Figur 5: einen Teileiner Radialpresse;
- Figur 6: ein Langloch im Detail, in welchem ein Spannsegment) geführt ist;

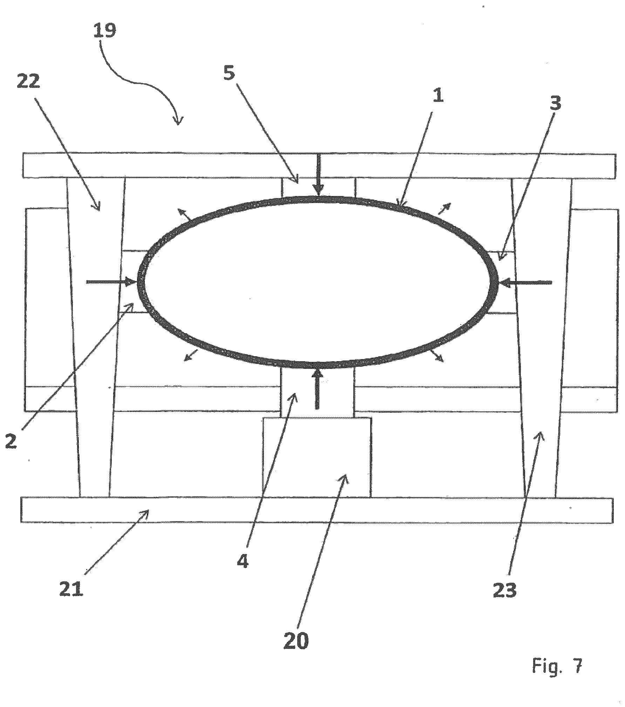

- Figur 7: eine schematische Keilpresse zum Ausüben des erfindungsgemäßen Verfahrens und

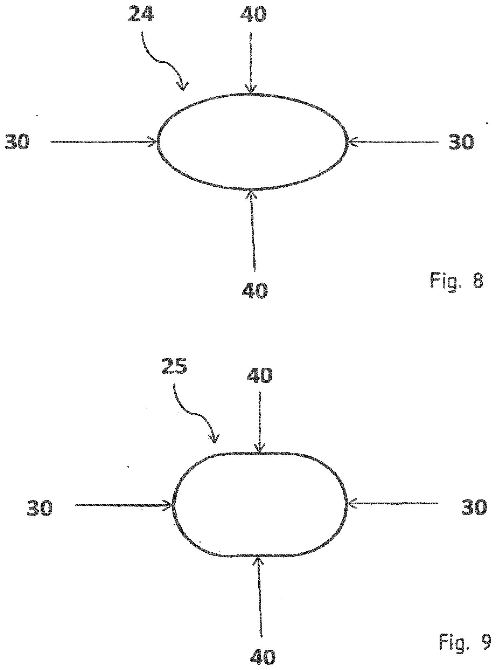

- Figuren 8 bis 11: verschiedene Querschnittsformen eines Gehäuses.

Figur 1 zeigt die Einspannsituation eines ovalen Gehäuses (1). Das Gehäuse (1) wird durch Spannsegmente (2) und (3) in Pfeilrichtung am relativ kleinsten Radius des Gehäuses (1) elastisch auf eine Minimalkontur geklemmt. Die Spannsegmente (4) und (5) sind auf Nominalmaß ausgelegt und klemmen das Gehäuse (1) in Pfeilrichtung elastisch auf Nominalmaß am relativ größten Radius des Gehäuses (1). Dadurch werden die mittleren Radien des Gehäuses (1) in Pfeilrichtung elastisch nach außen verdrängt und so einem Abflachen des Gehäuses (1) entgegengewirkt.

Figur 2 zeigt eine schematische Klemmvorrichtung (6) zum Ausüben des erfindungsgemäßen Verfahrens im Querschnitt. Das Gehäuse (1) ist in einem Längsschnitt dargestellt. Das Gehäuse (1) hat beim Einlegen in die Klemmvorrichtung (6) Positionierungsrollen (7, 8) durchlaufen. Die Positionierungsrollen (7, 8) dienen dazu, ein möglichst genaues Einlegen des Gehäuses (1) in die Klemmvorrichtung (6) sicherzustellen. Geringfügige Verdrehungen von wenigen Grad können aber dennoch nicht ausgeschlossen werden, da eine nicht näher dargestellte Zuführvorrichtung trotz der Positionierungsrollen (7, 8) das Gehäuse (1) nicht so genau in die Klemmvorrichtung (6) einlegen kann. Die Positionierungsrollen (7, 8) sind über Federn an einer Grundplatte (9) befestigt. Die Grundplatte (9) ist wiederum mit einem drehbeweglich gelagerten Einstellring (10) verbunden. Der Einstellring (10) übt über eine Keilplatte (11) und Rollen (12, 13) eine Kraft auf Spannsegmente (4, 5) aus, wodurch die Spannsegmente (4, 5) Klemmkräfte auf das Gehäuse (1) übertragen. Die Spannsegmente (4, 5) können dabei vom Einstellring (10) sowohl einwärts als auch auswärts verfahren werden. Direkt vor der Klemmvorrichtung (6) befindet sich ein Stopftrichter (14). Das Gehäuse (1) liegt stirnseitig an einem kleinsten Durchmesser (15) des Stopftrichters (14) an. Dabei ist die Kontur am kleinsten Durchmesser (15) des Stopftrichters (14) nur ganz geringfügig kleiner als die Kontur an der Stirnseite (16) des Gehäuses (1). Durch das erfindungsgemäße Klemmen des Gehäuses (1) über die Klemmvorrichtung (6) wird sichergestellt, dass die Kontur des Gehäuses (1) an die Idealkontur angenähert wird, damit an keiner Stelle der Stirnseite (16) des Gehäuses (1) ein nicht dargestellter mit einer Lagerungsmatte umwickelter Monolith, welcher durch den Stopftrichter (14) in das Gehäuse (1) gestopft wird, auf eine stirnseitige Gehäusekante des Gehäuses (1) trifft. Auf diese Weise kann erfindungsgemäß die Kontur des Stopftrichters (14) an seinem kleinsten Durchmesser (15) der stirnseitigen Kontur (16) des Gehäuses (1) entsprechen oder nur geringfügig kleiner sein. Dadurch wird ein Überpressen der um den Monolithen gewickelten Lagerungsmatte beim Durchqueren des kleinsten Durchmessers (15) am Stopftrichter (14) minimiert. Gegebenenfalls kann auch auf eine dünnere Lagerungsmatte zurückgegriffen werden. An der rückwärtigen Seite (17) des Gehäuses (1) greift während des Stopfvorgangs ein nicht näher dargestellter Gegenhalter ein, um das Gehäuse (1) gegen die Stopfkräfte in Position zu halten. Da mit dem erfindungsgemäßen Verfahren auch eine Gehäuseverdrehung ausgeglichen werden kann, wird der Gegenhalter erfindungsgemäß drehbeweglich gelagert, damit er eine Drehbewegung des Gehäuses (1) während des Einlegens oder des Klemmens nachvollziehen kann und dem nicht entgegenwirkt.

Figur 3 zeigt schematisch das Einlegen des Gehäuses (1) in die Klemmvorrichtung (6). Die Positionierungsrollen (7, 8, 70 ,80) beaufschlagen das Gehäuse (1) mit einer Federkraft, wodurch das Gehäuse in eine Einlegeposition gedreht wird. Kleinste Verdrehungen von 1 bis 2° können so jedoch nicht ausgeschlossen werden. An den kleinsten Radien des Gehäuses (1) spielen Verdrehungen von 1 bis 2° keine Rolle, an den mittleren Radien nehmen die Auswirkungen der Verdrehung jedoch zu, so dass es durch diese kleinen Verdrehungen passieren kann, dass die Lagerungsmatte an der Stirnseite des Gehäuses (1) geschert wird.

Figur 4 zeigt eine schematische Darstellung des elastischen Klemmens des Gehäuses (1) über den Einstellring (10). Der Einstellring (10) wird von einem Zylinder (18) angetrieben und verfügt über innenseitig ausgeformte Keile (100, 101, 102, 103), die bei einer Drehbewegung Spannsegmente (2, 3, 4, 5) einwärts verfahren können. Dabei sind die Spannsegmente (2) und (3) an den kleinsten Radien des Gehäuses (1) mit Kraft beaufschlagt und klemmen das Gehäuse (1) auf die Minimalkontur. Die Spannsegmente (4) und (5) in den größten Radien des Gehäuses (1) sind dagegen nur als Gegenhalter ausgelegt, um eine elastische Expansion des Gehäuses (1) auf Nominalmaß zu begrenzen. Die Gehäusekontur weicht sodann in Richtung der mittleren Radien aus, so dass das Gehäuse (1) insgesamt sich möglichst dem Nominalmaß annähert, in jedem Fall jedoch an jeder Stelle der stirnseitigen Kontur mindestens auf Minimalkontur eingestellt wird.

Figur 5 zeigt einen Teil (60) einer weiteren Radialpresse. Der Teil (60) besteht aus einer Führungsplatte (61) und einem drehbar gelagerten Einstellring (62). Im Einstellring (62) sind Langlöcher (63) vorhanden, über die acht Spannsegmente (64, 65, 66) durch eine Drehbewegung des Einstellrings (62) verfahren werden können. Durch die Spannsegmente (64, 65, 66) wird das ovale Gehäuse (1) geklemmt. Dabei übt ein erstes Spannsegment (66) eine Klemmkraft auf das Gehäuse (1) aus, ein dazu um 90° versetztes zweites Spannsegment (65) liegt zumindest am Gehäuse (1) an. Ein in einem 45° Winkel zum zweiten Spannsegment (6 5) versetztes drittes Spannsegment (64) ist vom Gehäuse (1) beabstandet und auf mindestens Maximalkontur des Gehäuses (1) ausgelegt. Dabei kann es erfindungsgemäß in einer weiteren bevorzugten Ausführungsform genügen, die zweiten Spannsegmente (65) nur als Anschlag oder Gegenhalter auszulegen.

Figur 6 zeigt das Langloch (63) im Detail. Das Spannsegment (65) ist bis zum Pressenanschlag im Langloch (63) verfahren worden. Dabei verläuft erfindungsgemäß eine Steigung (67) am Langloch (63) am Pressenanschlag gegen Null. Dadurch muss der nicht dargestellte Zylinder nicht gegen eine Rückstellkraft arbeiten.

Figur 7 zeigt eine schematische Keilpresse (19) zum Ausüben des erfindungsgemäßen Verfahrens. Wieder wird das Gehäuse (1) über die Spannsegmente (2, 3, 4, 5) radial geklemmt, wobei die Spannsegmente (2) und (3) die eigentlichen Klemmkräfte auf Minimalkontur aufbringen, während die Spannsegmente (4) und (5) als Gegenhalter auf Nominalmaß ausgelegt werden. Ein Zylinder (20) verschiebt das Spannsegment (4) nach oben und einen Keilrahmen (21) nach unten. Der Keilrahmen (21) drückt dabei das Spannsegment (5) nach unten und über die seitlichen Keile (22, 23) die Spannsegmente (2) und (3) nach innen. Das Gehäuse (1) wird radial geklemmt und weicht in den freien Bereichen in Richtung Maximalkontur aus.

Die Figuren 8 bis 11 zeigen verschiedene Querschnitte (24, 25, 26, 27) von Monolithen und damit auch verschiedene Gehäusequerschnitte (24, 25, 26, 27) inklusive Aufmaß für die Lagerungsmatte. Dabei zeigt die Figur 8 den bereits mehrfach erwähnten ovalen Querschnitt (24). Erfindungsgemäß wird dieser Querschnitt (24) an den Stellen (30) während des Stopfvorgangs auf Minimalkontur geklemmt. An den Stellen (40) wird das ovale Gehäuse (24) während des Stopfens auf Nominalkontur geklemmt.

Figur 9 zeigt im Querschnitt (25) ein Rechteck mit stark abgerundeten Ecken. Dieses Gehäuse (25) wird an den Stellen (30) während des Stopfvorgangs auf Minimalkontur geklemmt. An den Stellen (40) wird das Gehäuse (25) während des Stopfens auf Nominalkontur geklemmt.

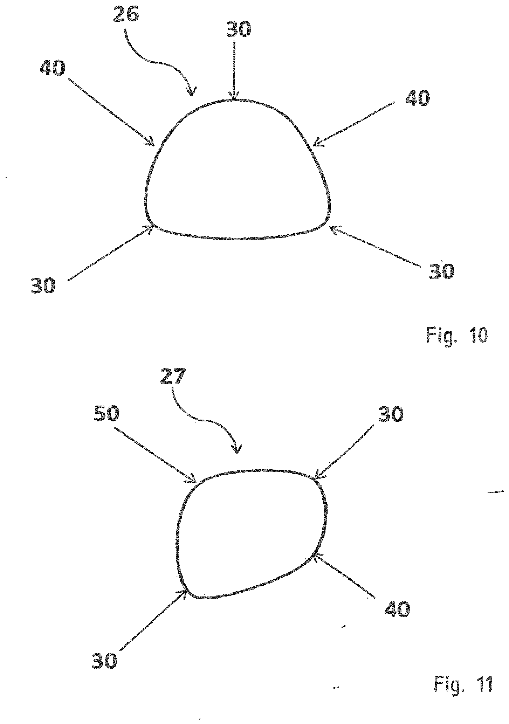

Figur 10 zeigt einen trapezförmigen Querschnitt (26) mit stark abgerundeten Ecken. Dieser trapezförmige Querschnitt (26) wird an den Stellen (30) während des Stopfvorgangs auf Minimalkontur geklemmt. An den Stellen (40) wird das Gehäuse (26) während des Stopfens auf Nominalkontur geklemmt.

Figur 11 zeigt einen etwa kartoffelförmigen Querschnitt (27). Dieser kartoffelförmige Querschnitt (27) wird an den Stellen (30) während des Stopfvorgangs auf Minimalkontur geklemmt. An den Stellen (40) wird das Gehäuse (27) während des Stopfens auf Nominalkontur geklemmt. An der Stelle (50) wird das Gehäuse (27) entweder auf Minimal- oder auf Nominalkontur geklemmt.

Erfindungsgemäß werden alle diese Querschnitte (24, 25, 26, 27) radial im Bereich eines kleineren Radius elastisch auf Minimalkontur geklemmt, während das Gehäuse (24, 25, 26, 27) im Bereich eines größeren oder mittleren Radius mindestens bis auf Nominalmaß expandieren kann.

### Bezugszeichen:

- 1 -: Gehäuse
- 2 -: Spannsegment
- 3 -: Spannsegment
- 4 -: Spannsegment
- 5 -: Spannsegment
- 6 -: Klemmvorrichtung
- 7 -: Positionierrolle
- 8 -: Positionierrolle
- 9 -: Grundplatte
- 10 -: Einstellring
- 11 -: Keilplatte
- 12 -: Rolle
- 13 -: Rolle
- 14 -: Stopftrichter
- 15 -: kleinster Durchmesser zu 14
- 16 -: Stirnseite zu 1
- 17 -: Rückseite zu 1
- 18 -: Zylinder
- 19 -: Keilpresse
- 20 -: Zylinder
- 21 -: Keilrahmen
- 22 -: seitlicher Keil
- 23 -: seitlicher Keil
- 24 -: Gehäusequerschnitt zu 1
- 25 -: Gehäusequerschnitt zu 1
- 26 -: Gehäusequerschnitt zu 1
- 27 -: Gehäusequerschnitt zu 1
- 30 -: Stelle zu 24, 25, 26, 27
- 40 -: Stelle zu 24, 25, 26, 27
- 50 -: Stelle zu 24, 25, 26, 27
- 60 -: Teil der Radialpresse
- 61 -: Führungsplatte
- 62 -: Einstellring
- 63 -: Langloch
- 64 -: Spannsegment
- 65 -: Spannsegment
- 66 -: Spannsegment
- 67 -: Steigung zu 63
- 70 -: Positionierrolle
- 80 -: Positionierrolle
- 100 -: Keil
- 101 -: Keil
- 102 -: Keil
- 103 -: Keil

## Patentansprüche

1. Verfahren zum Einhausen eines Monolithen mit einer Lagerungsmatte in ein Gehäuse (1), wobei der Monolith mit der Lagerungsmatte umwickelt und in das Gehäuse (1) gestopft wird, **dadurch gekennzeichnet, dass** das Gehäuse (1) nur im Eingangsbereich unmittelbar vor einem Stopftrichter (14) während des Stopfens radial an mehreren Stellen elastisch geklemmt wird, wobei durch die Klemmung mittels einer elastischen Verformung eine Gehäusetoleranz und/oder eine Gehäuseverdrehung ausgeglichen werden.

2. Verfahren zum Einhausen eines Monolithen nach Anspruch 1, **dadurch gekennzeichnet, dass** ein im Querschnitt rundes Gehäuse (1) mittels mindestens eines Spannsegments (2, 3) radial auf Nominalkontur geklemmt wird.

3. Verfahren zum Einhausen eines Monolithen nach Anspruch 1, **dadurch gekennzeichnet, dass** ein im Querschnitt unrundes Gehäuse (1) radial im Bereich eines kleineren Radius mittels eines Spannsegments (2, 3) auf Minimalkontur geklemmt wird, während das Gehäuse (1) im Bereich eines größeren oder mittleren Radius expandieren kann.

4. Verfahren zum Einhausen eines Monolithen nach Anspruch 3, **dadurch gekennzeichnet, dass** im Bereich eines großen Radius ein Spannsegment (4, 5) angebracht wird, das auf eine Nominalkontur an dieser Stelle ausgelegt wird.

5. Verfahren zum Einhausen eines Monolithen nach einem der vorangegangenen Ansprüche 3 und 4, **dadurch gekennzeichnet, dass** im Bereich eines mittleren Radius ein Spannsegment (64) angebracht wird, das mindestens auf eine Maximalkontur an dieser Stelle ausgelegt wird.

6. Verfahren zum Einhausen eines Monolithen nach einem der vorangegangenen Ansprüche 3 bis 5, **dadurch gekennzeichnet, dass** im Bereich des mittleren und/ oder des großen Radius das Spannsegment (4, 5, 64) als Gegenhalter oder Anschlag ausgebildet wird.

7. Verfahren zum Einhausen eines Monolithen nach einem der vorangegangenen Ansprüche 3 bis 6, **dadurch gekennzeichnet, dass** das Gehäuse (1) einen ovalen Querschnitt aufweist.

8. Verfahren zum Einhausen eines Monolithen nach Anspruch 7, **dadurch gekennzeichnet, dass** das Gehäuse (1) mittels vier Spannsegmenten (2, 3, 4, 5) umfangsseitig geklemmt wird, wobei zwei erste Spannsegmente (2, 3) an einem kleinsten Radius des Normquerschnitts auf die Minimalkontur des Gehäuses (1) ausgelegt werden und zwei zweite Spannsegmente (4, 5) an einem großen Radius des Normquerschnitts auf eine Nominalkontur des Gehäuses (1) ausgelegt werden.

9. Verfahren zum Einhausen eines Monolithen nach einem der vorangegangenen Ansprüche, **dadurch gekennzeichnet, dass** das Gehäuse (1) mittels einer Radialpresse (6, 60) geklemmt wird.

10. Verfahren zum Einhausen eines Monolithen nach Anspruch 9, **dadurch gekennzeichnet, dass** die Spannsegmente (64, 65, 66) über Langlöcher (63) verfahren werden.

11. Verfahren zum Einhausen eines Monolithen nach einem der vorangegangenen Ansprüche 9 und 10, **dadurch gekennzeichnet, dass** eine Steigung (67) im Langloch (63) an einem Pressenanschlag gegen Null verläuft, um die Rückstellkraft auf einen Zylinder zu minimieren.

12. Verfahren zum Einhausen eines Monolithen nach einem der vorangegangenen Ansprüche, **dadurch gekennzeichnet, dass** ein Gegenhalter zum Halten des Gehäuses während des Stopfvorgangsdrehbeweglich gelagert wird.

## Claims

1. Method for enclosing a monolith with a mounting mat in a housing (1), wherein the monolith is wrapped in the mounting mat and stuffed into the housing (1), **characterised in that** during the stuffing the housing (1) is radially elastically clamped at several points only in the entrance region directly in front of a stuffing funnel (14), a housing tolerance and/or a housing rotation being compensated by an elastic deformation caused by the clamping.

2. Method for enclosing a monolith according to one of the preceding claims, **characterised in that** a housing (1) of circular cross-section is radially clamped by means of at least one clamping segment (2, 3) to conform to a nominal contour

3. Method for enclosing a monolith according to claim 1, **characterised in that** a housing (1) of non-circular cross section is radially clamped by means of a clamping segment (2, 3) in the region of a smaller radius to conform to a minimum contour, while the housing (1) is able to expand in the region of a greater or intermediate radius.

4. Method for enclosing a monolith according to claim 3, **characterised in that** a clamping segment (4, 5) is applied in the region of a large radius, said clamping segment being designed for a nominal contour at this point.

5. Method for enclosing a monolith according to one of the preceding claims 3 and 4, **characterised in that** a clamping segment (64) is applied in the region of an intermediate radius, said clamping segment being designed at least for a maximum contour at this point.

6. Method for enclosing a monolith according to one of the preceding claims 3 to 5, **characterised in that** the clamping segment (4, 5, 64) is formed as a counter-support or a stop in the region of the intermediate and/or the large radius.

7. Method for enclosing a monolith according to one of the preceding claims 3 to 6, **characterised in that** the housing (1) has an oval cross-section.

8. Method for enclosing a monolith according to claim 7, **characterised in that** the housing (1) is peripherally clamped by means of four clamping segments (2, 3, 4, 5), two first clamping segments (2, 3) at a smallest radius of the standard cross-section being designed for the minimum contour of the housing (1) and two second clamping segments (4, 5) at a large radius of the standard cross-section being designed for a nominal contour of the housing (1).

9. Method for enclosing a monolith according to one of the preceding claims, **characterised in that** the housing (1) is clamped by a radial press (6, 60).

10. Method for enclosing a monolith according to claim 9, **characterised in that** the clamping segments (64, 65, 66) are moved along through longitudinal slots (63).

11. Method for enclosing a monolith according to one of the preceding claims 9 and 10, **characterised in that** a slope (67) in the longitudinal slot (63) approaches zero at a press stop so as to minimise the restoring force onto a cylinder.

12. Method for enclosing a monolith according to one of the preceding claims, **characterised in that** a counter-support is rotationally mounted for holding the housing during the stuffing operation.

## Revendications

1. Procédé d'incorporation d'un monolithe avec une natte de montage dans un boîtier (1), dans lequel le monolithe est enveloppé par la natte de montage et tassé dans le boîtier (1), **caractérisé en ce que** le boîtier (1) est bloqué radialement en plusieurs points de manière élastique au cours du tassement uniquement dans la zone d'entrée directement avant un entonnoir de tassement (14), dans lequel une tolérance du boîtier et/ou une torsion du boîtier est ou sont compensées par le blocage au moyen d'une déformation élastique.

2. Procédé d'incorporation d'un monolithe selon la revendication 1, **caractérisé en ce qu'**un boîtier (1) à la coupe transversale ronde est bloqué radialement sur un contour nominal au moyen d'au moins un segment de serrage (2, 3).

3. Procédé d'incorporation d'un monolithe selon la revendication 1, **caractérisé en ce qu'**un boîtier (1) à la coupe transversale non ronde est bloqué sur un contour minimal radialement dans la zone d'un rayon plus petit au moyen d'un segment de serrage (2, 3), tandis que le boîtier (1) peut se déployer dans la zone d'un rayon plus grand ou moyen.

4. Procédé d'incorporation d'un monolithe selon la revendication 3, **caractérisé en ce que** dans la zone d'un grand rayon est appliqué un segment de serrage (4, 5) qui est conçu sur un contour nominal en ce point.

5. Procédé d'incorporation d'un monolithe selon l'une quelconque des revendications précédentes 3 et 4, **caractérisé en ce que** dans la zone d'un rayon moyen est appliqué un segment de serrage (64) qui est conçu au moins sur un contour maximal en ce point.

6. Procédé d'incorporation d'un monolithe selon l'une quelconque des revendications précédentes 3 à 5, **caractérisé en ce que** le segment de serrage (4, 5, 64) est réalisé, dans la zone du rayon moyen et/ou du grand rayon, sous la forme d'un soutien ou d'une butée.

7. Procédé d'incorporation d'un monolithe selon l'une quelconque des revendications précédentes 3 à 6, **caractérisé en ce que** le boîtier (1) présente une section transversale ovale.

8. Procédé d'incorporation d'un monolithe selon la revendication 7, **caractérisé en ce que** le boîtier (1) est bloqué côté périphérie au moyen de quatre segments de serrage (2, 3, 4, 5), dans lequel deux premiers segments de serrage (2, 3), au niveau d'un rayon le plus petit de la section transversale standard, sont conçus sur le contour minimal du boîtier (1) et deux deuxièmes segments de serrage (4, 5), au niveau d'un grand rayon de la section transversale standard, sont conçus sur un contour nominal du boîtier (1).

9. Procédé d'incorporation d'un monolithe selon l'une quelconque des revendications précédentes, **caractérisé en ce que** le boîtier (1) est bloqué au moyen d'une presse radiale (6, 60).

10. Procédé d'incorporation d'un monolithe selon la revendication 9, **caractérisé en ce que** les segments de serrage (64, 65, 66) sont déplacés sur des trous oblongs (63).

11. Procédé d'incorporation d'un monolithe selon l'une quelconque des revendications précédentes 9 et 10, **caractérisé en ce qu'**une pente (67) dans le trou oblong (63) sur une butée de presse suit un tracé vers zéro pour minimiser la force de rappel sur un cylindre.

12. Procédé d'incorporation d'un monolithe selon l'une quelconque des revendications précédentes, **caractérisé en ce qu'**un soutien est monté pour maintenir le boîtier au cours de l'opération de tassement avec mouvement de rotation.
